(19) Europäisches Patentamt
European Patent Office
Office européen des brevets

(11) Publication number: **0 161 610 B1**

# EUROPEAN PATENT SPECIFICATION

(45) Date of publication of patent specification: **20.02.91**  (51) Int. Cl.⁵: **B60D 1/30**, A01B 59/04

(21) Application number: **85105498.1**

(22) Date of filing: **06.05.85**

(54) **Stabilizing arrangement.**

(30) Priority: **16.05.84 GB 8412490**

(43) Date of publication of application:
**21.11.85 Bulletin 85/47**

(45) Publication of the grant of the patent:
**20.02.91 Bulletin 91/08**

(84) Designated Contracting States:
**DE FR GB IT**

(56) References cited:
**DE-A- 3 206 756**
**DE-A- 3 322 072**
**US-A- 3 207 529**

(73) Proprietor: **LANDINI SpA**
**Via Santo Stefano 71**
**Bologna(IT)**

(72) Inventor: **Santachiara, Dante**
**1, Via Garfagnana**
**Campagnola (Reggio Emilia)(IT)**

(74) Representative: **Morrall, Roger et al**
**Massey-Ferguson Group Limited, Patents**
**Department**
**Stareton, Kenilworth, Warwickshire CV8**
**2LJ(GB)**

## Description

Technical Field

This invention relates to a stabilizing arrangement for tractor draft links, such arrangements being used to control the permitted amount of side sway which an implement supported by the draft links can execute relative to the tractor.

A wide variety of stabilizing arrangements are known. For example, the sides of the draft links (or blocks carried thereon) may be arranged to rub against generally vertically extending contact members carried by the rear of the tractor. These contact members (or the blocks if used) may be adjustable in their position to enable the amount of side sway to be adjusted.

Another popular form of stabilizing arrangement is the so-called check-chain arrangement in which chains are connected between the links and the tractor and the length of these chains is adjusted so that the side sway of the links is checked by placing the chains in tension as the limits of the desired side sway are reached.

Another well known type of stabilizing device corresponding to the preamble of claim 1 is the so-called telescopic stabilizer in which two parts of the stabilizer slide telescopically relative to each other as the associated draft link sways sideways and the minimum length which the stabilizer can achieve during this telescopic action is limited in order to provide a stop to limit the side sway of the link in one direction. By connecting such a telescopic stabilizer between each draft link and the tractor and arranging the stabilizers to limit the side sway in opposite directions, the side sway of any implement supported by the draft links can then be controlled in both directions. As is well known the amount of permitted sidesway using such a telescopic stabilizer arrangement can be adjusted by adjusting the minimum permitted length of the stabilizers.

The known forms of stabilizing arrangement suffer from a number of disadvantages. Firstly, adjustments to the amount of permitted side sway can only be made by the Operator dismounting from the tractor and physically adjusting the stabilizing arrangement at the rear of the tractor by, for example, adjusting the length of the check chains or the minimum permitted length of any telescopic stabilizer which may be used.

Also, it is considered desirable, particularly when using heavy implements, to ensure that when the implement is raised to its transport position no significant side sway is permitted since this could lead to large inertia forces being generated which might damage the tractor linkage. This may cause particular problems if it is desired to permit side sway when the implement is in its work position (as it required with most soil engaging implements), but to prevent side sway when the implement is raised to its transport position.

Although stabilizing arrangements are known, using for example tesescopic stabilizers, which automatically provide a "no side sway" condition when the implement is raised to the transport position these rely on the concept of connecting the draft links and stabilizers to the tractor about different pivot axes so that as the draft links are raised this causes a shortening in the effective length of the stabilizers. Thus if the operator wants to change, for example, between a condition when there is no side sway allowed in any position of the draft links (when the draft link and stabilizer pivots will be aligned) to a condition in which sideway is allowed in the work position but prevented in the transport position, it is necessary for him to dismount from the tractor and physical change the pivot points of the stabilizers on the tractor by, for example, removing pivot pins and moving these pins to higher pivot points.

Also, the arrangement described above suffers from the serious disadvantage that if the operator forgets that the stabilizer pivots are in the higher position and then, for example, sets the stabilizers to the longer minimum length required to give no sway in the work position, either the stabilizers will be bent or some other part of the three-point linkage will be damaged when the draft links are raised to their transport position since the geometry of the arrangement will attempt to shortening the effective length of the stabilizers below the minimum length set by the operator as the draft links are raised.

Disclosure of the Invention

It is an object of the present invention to provide an improved form of stabilizing arrangement which allows easier adjustment of the permitted side sway of the draft links.

It is a further object of the invention to provide a stabilizing arrangement which can easily be set up to allow the adjustment of the permitted side sway to be made from the tractor operators seat.

It is a still further object of the invention to provide a stabilizing arrangement which can be safely pivoted to the transport position without any risk of damage to the stabilizers or linkage no matter what stabilizer setting is employed. Thus according to the present invention there is provided a tractor draft link stabilizing arrangement for a pair of draft links pivoted on the tractor about a first transverse horizontal axis by first pivot means, the arrangement comprising a pair of telescopic stabilizers each having two parts which slide telescopically relative to each other as the associated draft link sways sideways, one part of each stabilizer being connected to a respective one of the draft links the other part of each stabilizer being operatively connected to the tractor for pivoting on second pivot means about a second horizontal axis, the second pivot means being mounted on the tractor by mounting means capable of moving each second pivot means relative to the first pivot means to adjust the amount of permitted shortening of the stabilizers and thus the permitted side sway of any implement connected between the draft links, each second pivot means being movable by the mounting means along a locus such that no matter what vertical position is occupied by the links, the stabilizers are never constrained to adopt a length less than their length when the centre of pivoting of the second pivot means lies on the first axis.

As will be appreciated, such an arrangement can conveniently be constructed so that the minimum permitted length of the stabilizers, which occurs when the centre of pivotting of the second pivot means lies on the first axis, gives a no side sway condition. In such an arrangement the amount of side sway for a given vertical position of the draft links can then be increased by moving both second pivot means away from the first axis along said loci.

Preferably the loci are chosen so that, no matter where the second pivot means are located on said loci, when the draft links are in their transport position the stabilizers are at or closely adjacent their minimum length position. This or will automatically ensure that the draft links assume a no-sway condition when they are raised to their transport position.

In a preferred arrangement the mounting means is provided with an operating means which enables the second pivot means to be moved from a tractor operator's seat.

Preferably the mounting means includes pivotable arms which support the second pivot means, thus allowing the movement of each second pivot means along arcuate loci by pivoting of the arms.

Description of the Drawings

One embidoment of the invention will now be described, by way of example only, with reference to the accompanying drawings in which:

Figure 1 is a side view of a tractor three-point hitch fitted with a stabilizing arrangement in accordance with the present invention;

Figure 2 is a plan view of the lower part of the linkage shown in Figure 1 showing two alternative forms of draft link;

Figure 3 is an enlarged view of part of the stabilizing arrangement shown in Figure 1, and

Figure 4 is a line diagram illustrating the geometry of the stabilizing arrangement of the present invention.

Best Mode of Carrying Out Invention

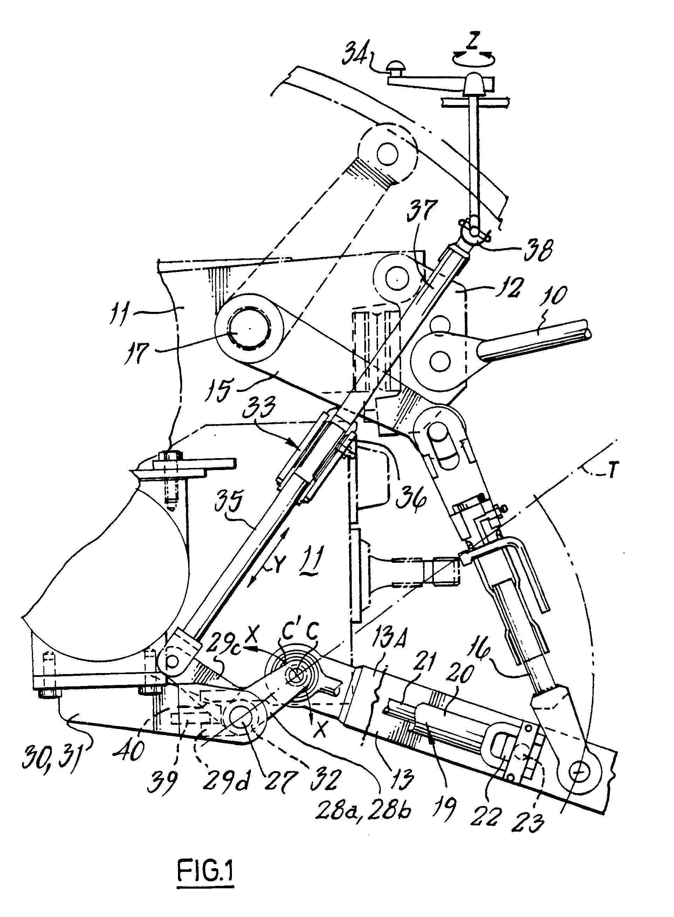

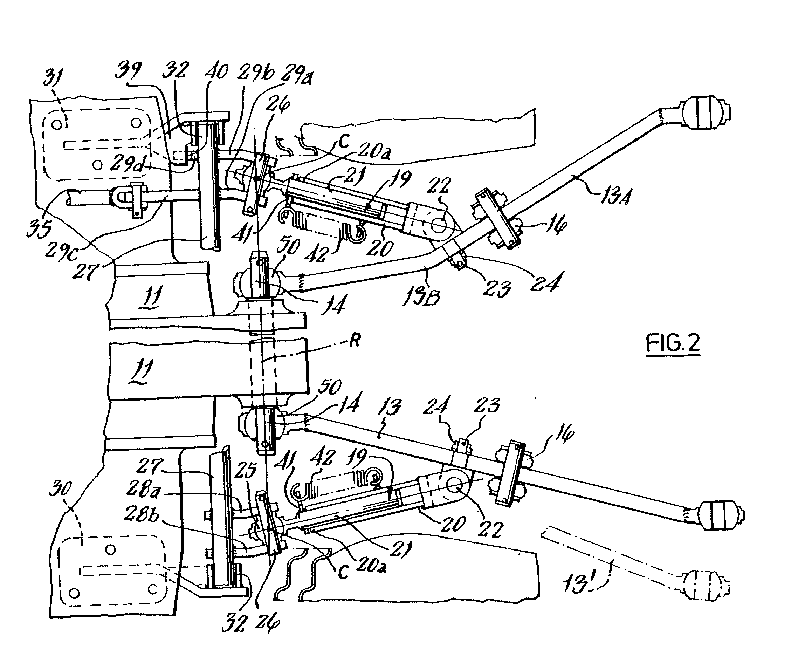

Figures 1 and 2 show a tractor three-point linkage in which a top link 10 is pivotally mounted on a tractor rear housing 11 via a pivoting casting 12 and in which two draft links 13,13a are mounted on the rear housing 11 for pivotting about a first axis R via ball mounts 50 and a cross shaft 14 which extends through the housing 11. The draft links 13,13a are raised in the normal manner by lift arms 15 which are mounted on a rock shaft 17 and by lift rods 16 which are operated by a piston and cylinder assembly (not shown) mounted within the housing 11.

In the arrangement shown in Figures 1 and 2, the three-point linkage is controlled by a well-known type of hydraulic draft control system which receives draft force signals as a result of the pivoting of casting 12 against a spring (not shown) and linkage position signals from the rotational position of a cam (not shown) mounted on rock shaft 17. It will be appreciated, however, that the type of draft force and position sensing arrangement employed to control the three-point linkage plays no part in the present invention and any form of sensing arrangement or draft control system could be employed.

It will be seen from Figure 2 that the right hand draft link 13A is of a cranked construction with an elbow at location 13B. This contrasts with the left hand draft link 13 in which the elbow 13B is not present. As will be appreciated, if it is desired to use the larger and heavier so called 'category II' implements the cranked form of draft link 13A is employed, whereas the smaller so called 'category I' implements will call for the straighter form of draft link shown at 13 in Figure 2. The actual shape of the draft links 13 plays no part in the present invention and will not therefore be referred to hereinafter.

Each draft link 13,13A is provided with a telescopic stabilizer 19 comprising an outer tubular member 20 and an inner rod member 21. Each outer tubular member 20 is connected with the associated draft link 13,13a via a joint 22 and a screw threaded pin 23 which receives a nut 24. The inner rod members 21 are provided with ball mounts 25 which receive mounting pins 26.

A stabilizer mounting means in the form of a shaft 27 with two pairs of support arms 28a,28b and 29a,29b is supported beneath the tractor housing 11 on brackets 30 and 31. The pairs of support arms 28a,28b and 29a,29b receive the mounting pins 26 and thus secure the stabilizers to the rear of the tractor for pivotting about second axes with centres of pivotting C.

In order to be able to move the pivot axes of the stabilizers (pivoted by pins 26) relative to the pivot axis R of the draft links, for reasons which will be explained below, the shaft 27 can be rotated through a limited arc within bearings 32 carried by brackets 31 as indicated by the arrow X-X in Figures I and 3. This rotation of the shaft 27 is achieved by a screw device 33 which is operated by a handle shown diagramatically at 34 and which is accessible from the tractor operator's seat.

As can be seen from Figures 1 and 2, the axially inner support arm 29a has a second limb 29c which is connected with a rod 35 which forms the inner screw-threaded part of screw device 33. The outer screw-threaded part 36 of screw device 33 is connected with an upper rod 37 which is connected with handle 34 via a universal joint 38.

Thus by rotating handle 34, as indicated by arrow Z, the outer part 36 of screw device 33 is also rotated thus screwing the rod 35 into or out of the screw device (as indicated by arrow Y) depending on the direction of rotation of handle 34. As will be appreciated, this movement Y of rod 35 results in rotation x of the cross shaft 27. As will be explained below, the amount of rotation of cross shaft 27 is limited by a plate 39 which engages a cut out 40 provided in an extension 29d of the outer support arm 29b so that the centre of pivotting C can move between the positions C and C' of Figures 1, 3 and 4.

As can be seen from Figure 2, the minimum length of each stabilizer 19 is achieved when the end 20a of each outer member makes contact with a plate 41 secured to each rod member 21. A spring 42 acts between each outer member 20 and inner member 21 to bias the stabilizer to its minimum length condition.

The stabilizing arrangement operates as follows.

With the arrangement set up as shown in Figures 1, 2 and 3 the centres of pivotting C of the forward ends of the stabilizers 19 lie on the axis of pivotting R of the draft links 13. The minimum length of the stabilizers 19 is chosen such that when the centres C lie on axis R (which condition exists when cutout 40 contacts the lower surface of plate 39) the stabilizers are fully compressed when an implement is connected between the draft links 13 and a "no side sway" condition exists.

It will be observed that when the centres C lie on the axis R there will be no change in the length of the stabilizers as the draft links are raised and lowered throughout their entire designed operating range. See for example the work position of the links shown in Figure 1 and the transport position indicated by the dotted line T. Thus, whatever the length of the stabilizers (and thus the permitted sidesway) which is set in say the work position this sidesway is maintained in the transport position if the centres C are left on the axis R.

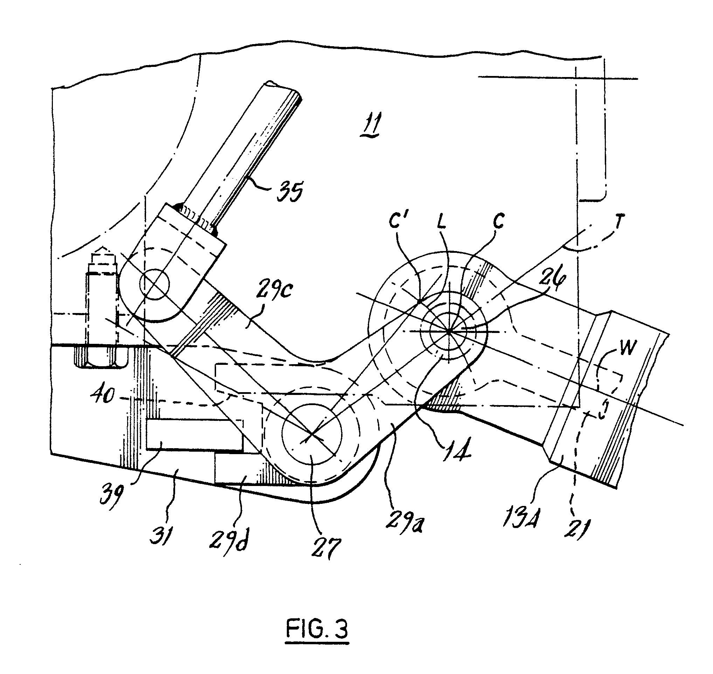

If, for example, the operator wishes to set-up the stabilizers 19 to give the maximum permitted sidesway in the work position of the draft links, which would allow sidesway to be dotted line position 13' of Figure 2, the operator rotates handle 34 to pivot shaft 27 in an anti-clockwise sense as viewed in Figures 1 and 3. This causes the mounting pins 26 and thus the centres of pivotting of the draft links 13 to move from position C of Figure 1, 3 and 4 to position C' along loci L so that the cutout 40 now contacts the upper surface of plate 39.

This movement of the mounting pins 26 extends the stabilizers 19 by drawing the inner rod members 21 a short distance out of the outer tubular members 20 thus allowing the links l3 to sway sideways to the 13' positions in both directions before the ends 20a of the outer tubular members 20 contact the plates 41.

Thus the cutout 40 in co-operation with plate 39 defines the two extreme positions C and C' respectively for the pins 26 which, as explained above, correspond to the no-sway and maximum sway conditions respectively when the draft links are in the work position.

The loci L are chosen so that if the draft links were to be raised from the working position W with the stabilizers set with the pins 26 either at the C' positions or anywhere between the C and C' positions described above the lengths of the stabilizers will shorten as the links are raised towards the transport position T so that at the transport position the stabilizers are at (or at least very close to) their minimum length and all or substantial all side sway has been eliminated from the linkage.

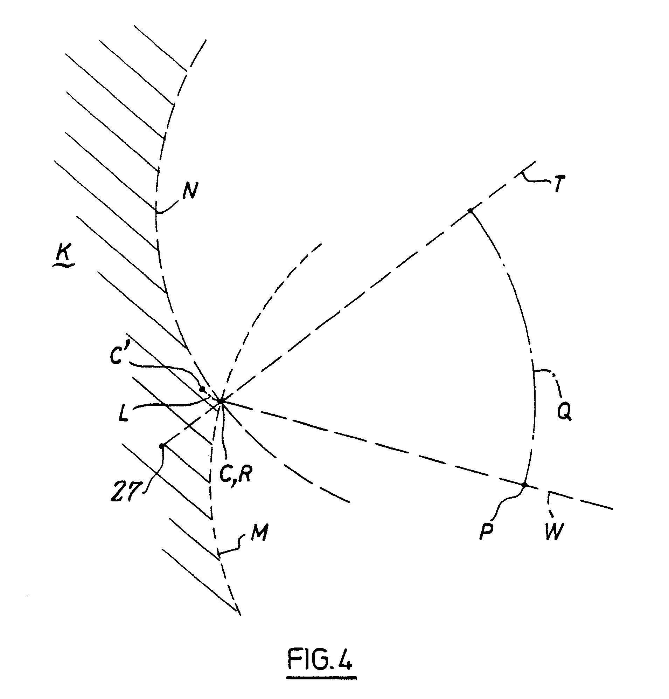

Reference to Figure 4 shows the basic geometry of the stabilizing arrangement when view in the same direction as Figure 1. Line W represents the working position of the draft links l3 and line T the transport position. Point P represents the point of attachment of pins 23 to the links 13 and arc Q represents the arc described by point P as the links move between the work and transport positions. Points C, C' and R represent centres C and C' and axis R respectively referred to above.

If arcs M and N are drawn with their centres at the point P in the work and transport positions respectively and both with radii equal to the distance CF it will be observed that these two arc define the boarders of an area K (shaded in Figure 4) within which the loci L must lie in order for the linkage never to constrain the stabilizers 19 to adopt a length less than their minimum length CP.

In order to ensure that the stabilizing arrangement automatically eliminates all or substantially all the side sway capability the loci, which are arcuate in the example described, are chosen so that they lie close to the arc N. This is achieved in the example described by choosing loci L of suitably large radii and by position the rod 27 (which defines the centres of curvature of loci L) appropriately relative to the rod 14 and to the raised position of draft links 13,13A.

## Claims

1. A tractor draft link stabilizing arrangement for a pair of draft links (13,13a) pivoted on the tractor (11) about a first transverse horizontal axis (R) by first pivot means (14,50), the arrangement comprising a pair of telescopic stabilizers (19) each having two parts (20,21) which slide telescopically relative to each other as the associated draft link sways sideways, one part of each stabilizer being connected (22,23) to a respective one of the draft links the other part of each stabilizer being operatively connected to the tractor for pivoting on second pivot means (25,26) about a second horizontal axis, the stabilizing arrangement being characterised in that the second pivot means is mounted on the tractor by mounting means (27,28a,28b,29a, 29b) capable of moving each second pivot means relative to the first pivot means to adjust the amount of permitted shortening of the stabilizers and thus the permitted side sway of any implement connected between the draft links, each second pivot means being movable by the mounting means along a locus (L) such that no matter what vertical position is occupied by the links, within the designed pivoting range of the links, the stabilizers are never constrained to adopt a length less than their length when the centre of pivoting (C) of the second pivot means lies on the first axis (R).

2. A stabilizing arrangement according to claim 1 characterised in that the minimum permitted length of the stabilizers (19), which occurs when the centre of pivoting (C) of the second pivot means (25,26) lies on the first axis (R), gives a no side sway condition and the amount of side sway for a given vertical position of the draft links is increased by moving both second pivot means away from the first axis along said loci (L).

3. A stabilizing arrangement according to claim 1 or claim 2 characterised in that the loci (L) are chosen so that, no matter where the second pivot means (25,26) are located on said loci, when the draft links are in their transport position (T) the stabilizers (19) are at or closely adjacent their minimum length position thus automatically ensuring that the draft links assume a no-sway condition when they are raised to their transport position.

4. A stabilizing arrangement according to any one of claims 1 to 3 characterised in that the locus (L) lies just outside but closely adjacent to an arc (N) centred on the draft link implement attachment points (P) with the links in their transport position (T) and with a radius equal to the distance (CP) between the first pivot means centre (C) and the implement attachment point centre (P).

5. A stabilizing arrangement according to any one of claims 1 to 4 characterised in that the mounting means includes pivotable arms (28a, 28b, 29a, 29b) which support the second pivot means (25,26), thus allowing the movement of each second pivot means along arcuate loci (L) by pivoting of the arms.

6. A stabilizing arrangement according to any one of claims 1 to 5 characterised in that the mounting means (27, 28a, 28b, 29a, 29b) is provided with an operating means (33, 34, 35, 36, 29c) which enables the second pivot means (25,26) to be moved from a tractor operator's seat.

## Revendications

1. l. Dispositif de stabilisation d'attelage de tracteur pour une paire d'attelages (l3,13a) pivotant sur le tracteur (11) autour d'un premier axe horizontal transversal (R) par un premier moyen de pivotement (14,50), le dispositif comprenant une paire de stabilisateurs télescopiques (19) comportant chacun deux parties (20,21) qui coulissent télescopiquement l'une par rapport à l'autre lorsque l'attelage associé se balance latéralement, une partie de chaque stabilisateur étant reliée (22,23) à l'attelage respectif, l'autre partie de chaque stabilisateur étant reliée d'une manière fonctionnelle au tracteur pour pivoter sur un second moyen de pivotement (25,26) autour d'un second axe horizontal, le dispositif de stabilisation étant caractérisé en ce que le second moyen de pivotement est monté sur le tracteur au moyen d'un ensemble de montage (27,28a,28b, 29a,29b) capable de déplacer chaque second moyen de pivotement par rapport au premier moyen de pivotement pour régler la valeur du racourcissement autorisé des stabilisateurs et ainsi le balancement autorisé d'un quelconque outil fixé entre les attelages, chaque second moyen de pivotement étant mobile par l'ensemble de montage le long d'une trajectoire (L) telle que, quelle que soit la position occupée par les attelages, dans le débattement autorisé pour le pivotement des attelages, les stabilisateurs ne soient jamais contraints d'adopter une longueur plus petite que la longueur qu'ils ont lorsque le centre de pivotement (C) des seconds moyens de pivotement se trouvent sur le premier axe (R).

2. Dispositif de stabilisation selon la revendication 1, caractérisé en ce que la longueur minimale autorisée des stabilisateurs (19), qui survient lorsque le centre de pivotement (C) des seconds moyens de pivotement (25,26) se trouve sur le premier axe (R), correspond à un état dans lequel il n'y a pas de balancement latéral et la valeur du balancement latéral pour une position verticale données des attelages augmente par le mouvement des deux seconds moyens de pivotement s'éloignant du premier axe le long des trajectoires (L).

3. Dispositif de stabilisation selon les revendications I ou 2, caractérisé en ce que les trajectoires (L) sont choisies de sorte que, quelle que soit la position des secon moyens de pivotement (25,26) sur lesdites trajectoires, lorsque les attelages sont dans leur position de transport (T), les stabilisateurs (I9) se trouvent à ou sont très proches de leur position de longueur minimum, assurant ainsi automatiquement que les attelages soient dans un état de non balancement lorsqu'ils sont relevés dans leur position de transport.

4. Dispositif de stabilisation selon l'une quelconque des revendications 1 à 3, caractérisé en ce que la trajectoire (L) se trouve juste à l'extérieur mais adjacente de manière proche d'un arc (N) centré sur les points (P) de fixation de l'outil sur l'attelage, les attelages étant dans leur position de transport (T), et qui a un rayon égal à la distance (CP) entre le centre du premier moyen de pivotement (C) et le centre du point de fixation de l'outil (P).

5. Dispositif de stabilisation selon l'une quelconque des revendications 1 à 4, caractérisé en ce que l'ensemble de montage comprend des bras pivotants (28a,28b,29a,29b) qui supportent les second moyens de pivotement (25,26) de manière à permettre, lorsque les bras pivotent, le mouvement de chaque second moyen de pivotement le long d'un arc des trajectoires (L).

6. Dispositif selon l'une quelconque des revendications 1 à 5, caractérisé en ce que l'ensemble de montage (27,28a, 28b,29a,29b) est pourvu d'un moyen de commande (33,34,35,36, 29c) qui permet aux second moyens de pivotement (25,26) d'être déplacés à partir du siège de l'opérateur du tracteur.

## Ansprüche

1. Stabilisierende Anordnung für ein Paar über erste Anlenkungen (14, 5O) am Schlepper (11) gelagerte und um eine erste horizontale Querachse (R) schwenkbare Zugstangen (13, 13a), welche ein Paar Teleskopstabilisatoren (19) aufweist, die aus jeweils zwei bei seitlichem Ausschwingen der zugeordneten Zugstange relativ zueinander teleskopartig gleitenden Teilen (20, 21) bestehen, wobei der eine Teil eines jeden Stabilisators mit der jeweiligen Zugstange verbunden (22, 23) und der andere Teil eines jeden Stabilisators zum Ausführen von Schwenkbewegungen um eine zweite horizontale Achse über zweite Anlenkungen (25, 26) am Schlepper gelagert ist, dadurch gekennzeichnet, dass die zweiten Anlenkungen über Befestigungsvorrichtungen (27, 28a, 28b, 29a, 29b) am Schlepper angeordnet sind, durch die jede der zweiten Anlenkungen relativ zu den ersten Anlenkungen zur Verstellung des Ausmasses der zulässigen Verkürzung der Stabilisatoren und damit des zulässigen seitlichen Ausschwingens eines zwischen den Zugstangen angebrachten Gerätes bewegbar ist, wobei die zweiten Anlenkungen durch die Befestigungsvorrichtungen derart entlang einer Linie geometrischer Punkte (L) bewegbar sind, dass unabhängig von der vertikalen Stellung der Zugstangen innerhalb ihres konstruktiv festgelegten Schwenkbereiches die Stabilisatoren in keinem Fall auf eine Länge bringbar sind, die geringer ist als die, da der Mittelpunkt (C) der Schwenkbewegung der zweiten Anlenkungen sich auf der ersten Achse (R) befindet.

2. Stabilisierende Anordnung nach Anspruch 1, dadurch gekennzeichnet, dass die zulässige Minimallänge der Stabilisatoren (19), die sich ergibt, wenn der Mittelpunkt der Schwenkbewegung (C) der zweiten Anlenkungen (25, 26) auf der ersten Achse (R) liegt, seitliches Ausschwingen verhindert und das Ausmass seitlichen Ausschwingens in gegebenen senkrechten Stellungen der Zugstangen durch Bewegen der beiden zweiten Anlenkungen von der ersten Achse weg entlang den geometrischen Punkten (L) vergrössert wird.

3. Stabilisierende Anordnung nach Anspruch 1 oder 2, dadurch gekennzeichnet, dass die geometrischen Punkte (L) so gewählt sind, dass unabhängig von der Lage der zweiten Anlenkungen (25, 26) auf den geometrischen Punkten, in Transportstellung (T) der Zugstangen die Stabilisatoren (19) sich in oder nahe an ihrer minimalen Längenausdehnung befinden, wodurch automatisch gewährleistet ist, dass die Zugstangen beim Anheben in ihre Transportstellung nicht ausschwingen.

4. Stabilisierende Anordnung nach einem der Ansprüche 1 bis 3, dadurch gekennzeichnet, dass die geometrischen Punkte (L) gerade ausserhalb, aber nahe an einem Kreisbogen (N) liegen, dessen Mittelpunkt die Gerätebefestigungspunkte (P) auf den in ihrer Transportstellung befindlichen Zugstangen bilden, und dessen Radius gleich dem Abstand (CP) zwischen dem Mittelpunkt (C) der ersten Anlenkungen und dem der Gerätebefestigungspunkte (P) ist.

5. Stabilisierende Anordnung nach einem der Ansprüche 1 bis 4, dadurch gekennzeichnet, dass die Befestigungsvorrichtungen Schwenkarme (28a, 28b, 29a, 29b) aufweisen, welche die zweiten Anlenkungen (25, 26) abstützen, wodurch die Bewegung der zweiten Anlenkungen entlang den kreisbogenförmig angeordneten geometrischen Punkten (L) durch Schwenken der Arme ermöglicht wird.

6. Stabilisierende Anordnung nach einem der Ansprüche 1 bis 5, dadurch gekennzeichnet, dass die Befestigungsvorrichtungen (27, 28a, 28b, 29a, 29b) mit einer Betätigungseinrichtung (33, 34, 35, 36, 29c) versehen sind, wodurch die zweiten Anlenkungen (25, 26) vom Schlepperfahrersitz aus bewegbar sind.

FIG.1

FIG. 2

EP 0 161 610 B1

FIG. 3

FIG.4